(19)

**Europäisches Patentamt**
**European Patent Office**
**Office européen des brevets**

(11) **EP 2 028 055 A2**

(12) **EUROPÄISCHE PATENTANMELDUNG**

(43) Veröffentlichungstag:
25.02.2009 Patentblatt 2009/09

(51) Int Cl.:
**B60R 11/02** (2006.01)

(21) Anmeldenummer: 08075695.0

(22) Anmeldetag: 08.08.2008

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **20.08.2007 DE 102007039879**

(71) Anmelder: **Funkwerk Dabendorf GmbH**
**15806 Dabendorf (DE)**

(72) Erfinder:
• **Bartsch, Thomas**
**15806 Zossen/OT Dabendorf (DE)**
• **Fenske, Michael**
**14554 Seddiner See/OT Neuseddin (DE)**
• **Koppelmeyer, Sebastian**
**12305 Berlin (DE)**

(74) Vertreter: **Patentanwälte Bressel und Partner**
**Radickestrasse 48**
**12489 Berlin (DE)**

(54) **Anordnung zur Ankopplung und Aufnahme eines Mobiltelefons innerhalb eines Kraftfahrzeugs**

(57) Die Erfindung betrifft eine Anordnung zur Ankopplung eines Mobiltelefons an Einrichtungen eines Kraftfahrzeugs, wobei die Anordnung eine Ankopplungseinheit (K) aufweist, die in dem Kraftfahrzeug verbaubar ist. Die Ankopplungseinheit (K) weist eine Freisprecheinrichtung (54) und eine Aussparung (35) auf, sodass in einem Zustand, in dem die Ankopplungseinheit (K) in dem Kraftfahrzeug verbaut ist, das Mobiltelefon (7) zumindest teilweise in die Aussparung (35) einbringbar ist. Ferner weist die Ankopplungseinheit (K) eine Ankopplungseinrichtung (63) zum drahtlosen Ankoppeln des Mobiltelefons (7) an die Freisprecheinrichtung (54) auf, um über die Ankopplungseinrichtung (63) einen Freisprechbetrieb zu ermöglichen.

Fig. 2

EP 2 028 055 A2

**Beschreibung**

Die Erfindung betrifft eine Anordnung zur Ankopplung eines Mobiltelefons an Einrichtungen eines Kraftfahrzeugs und insbesondere zur Aufnahme des Mobiltelefons innerhalb des Kraftfahrzeugs. Die Erfindung betrifft ferner ein Verfahren zum Ankoppeln und Anordnen des Mobiltelefons in dem Kraftfahrzeug.

Unter einem Mobiltelefon wird ein Gerät verstanden, das über eine Funkschnittstelle mit einer entfernt gelegenen Station kommunizieren kann, während es bewegt wird. Das Gerät muss nicht zwingend eine Tastatur aufweisen und nicht zwingend sowohl für den Sendebetrieb als auch den Empfangsbetrieb geeignet sein. Z. B. kann es sich bei dem Mobiltelefon um einen mobilen Notfallsender handeln, der auf Knopfdruck ein Notsignal zu der Station sendet.

Es sind bereits zahlreiche Halter bekannt, mit denen ein Mobiltelefon innerhalb eines Kraftfahrzeugs an einem gewünschten Ort gehalten werden kann. Meist sind in den Haltern Anschlüsse zum elektrischen Ankoppeln (Anschließen) des Mobiltelefons an eine Freisprechanlage und/oder an eine Antenne des Kraftfahrzeugs integriert. Es ist jedoch auch bekannt, dass das Mobiltelefon über eine Bluetooth-Funkschnittstelle mit der in dem Kraftfahrzeug verbauten Freisprechanlage verbunden werden kann.

Die Halter sind jedoch in der Regel nur für eine bestimmte Bauform von Mobiltelefonen geeignet. Wenn ein anderer Typ von Mobiltelefonen gehaltert werden soll, ist in der Regel ein neuer Halter oder zumindest ein neuer Adapter erforderlich.

Aus der DE 103 13 625 A1 ist eine Aufnahmevorrichtung für ein Mobilfunkgerät bekannt mit Haltemitteln zum Fixieren des Mobilfunkgeräts mit einer vorbestimmten Halteposition und einer Koppelantenne die derart ausgebildet und angeordnet ist, dass bei in der Halteposition befindlichem Mobilfunkgerät eine drahtlose Kopplung zwischen einer Mobilgeräteantenne des Mobilfunkgeräts und der Koppelantenne vorliegt. Zum Schutz vor gesundheitlichen Risiken von in der Nähe der Aufnahmevorrichtung befindlichen Personen wird die Übertragungsleistung der drahtlosen Kopplung gering gehalten und ist außerdem ein Verstärkerelement vorgesehen, das Signale in einer Übertragungsleitung zu einer externen Antenne eines Kraftfahrzeugs verstärkt.

Es ist eine Aufgabe der vorliegenden Erfindung, eine Anordnung anzugeben, die für die Aufnahme einer Vielzahl von unterschiedlichen Mobiltelefontypen geeignet ist.

Es wird eine Anordnung zur Ankopplung eines Mobiltelefons an Einrichtungen eines Kraftfahrzeugs vorgeschlagen, wobei die Anordnung eine Ankopplungseinheit aufweist, die in dem Kraftfahrzeug verbaubar ist. Die Ankopplungseinheit weist eine Freisprecheinrichtung auf. Ferner weist die Ankopplungseinheit eine Aussparung (im folgenden auch Ausnehmung genannt) auf, sodass in einem Zustand, in dem die Ankopplungseinheit in dem Kraftfahrzeug verbaut ist, das Mobiltelefon zumindest teilweise in die Aussparung einbringbar ist. Die Ankopplungseinheit weist eine Ankopplungseinrichtung zum drahtlosen Ankoppeln des Mobiltelefons an die Freisprecheinrichtung auf, um über die Ankopplungseinrichtung einen Freisprechbetrieb zu ermöglichen.

Unter der Ankopplungseinheit wird insbesondere eine einzige bautechnische Einheit verstanden. Eine solche bautechnische Einheit kann daher separat gefertigt werden und in einem einzigen Einbauschritt in das Kraftfahrzeug eingebaut werden.

Unter einer Freisprecheinrichtung wird eine Einrichtung verstanden, die es Personen in dem Fahrzeug ermöglicht, Telefongespräche zu führen, ohne das Mobiltelefon in den Händen halten zu müssen. Insbesondere kann in die Freisprecheinrichtung daher zumindest ein Mikrofon und/oder zumindest ein Lautsprecher integriert sein. Alternativ oder zusätzlich sind zumindest ein Mikrofon und/oder zumindest ein Lautsprecher über jeweils eine elektrische Verbindung mit der Freisprecheinrichtung verbunden. Beim Führen eines Telefonats werden die empfangenen Sprachsignale über den zumindest einen Lautsprecher in akustische Signale umgewandelt und werden Laute in dem Fahrzeug-Innenraum über das zumindest eine Mikrofon empfangen, so dass entsprechende Signale über das Mobiltelefonnetz zu anderen Gesprächsteilnehmern übertragen werden können. Der oder die Lautsprecher können so angeordnet sein, dass die akustischen Signale im Fahrzeug-Innenraum gehört werden können. Alternativ oder zusätzlich kann zumindest ein Lautsprecher als Ohr-Lautsprecher für lediglich eine Person ausgestaltet sein, der z. B. am Ohr der Person befestigbar ist.

Wie beschrieben ist in die Freisprecheinrichtung nicht zwangsläufig ein Mikrofon und ein Lautsprecher integriert. Eine Freisprecheinrichtung zeichnet sich jedoch dadurch aus, dass sie in einem Freisprechbetrieb

- vom Mobiltelefon empfangene Ausgabesignale, die Audioinformationen zur akustischen Ausgabe an einen Benutzer des angekoppelten Mobiltelefons enthalten, umsetzt, verarbeitet und/oder zumindest an einen Lautsprecher weiterleitet, und/oder
- von einem Mikrofon aufgenommene Schallsignale umsetzt, verarbeitet und/oder zumindest an das an die Freisprecheinrichtung angekoppelte Mobiltelefon weiterleitet.

Da im Fall der vorliegenden Erfindung das Mobiltelefon drahtlos, d.h. ohne elektrisch leitende Verbindung, an die Freisprecheinrichtung angekoppelt ist, hat die Freisprecheinrichtung zumindest die Funktion, die drahtlose Verbindung zur Übertragung der Ausgabesignale und/oder zu Übertragung der aufgenommenen Schallsignale zu betreiben.

Die drahtlose Verbindung kann z. B. eine Verbindung gemäß dem Bluetooth-Standard (IEEE 802.15.1) sein. Es sind jedoch auch Verbindungen anderer Art möglich, z. B. Infrarotverbindungen.

Die drahtlose Ankopplung des Mobiltelefons an die Freisprecheinrichtung schließt jedoch nicht aus, dass z. B. zum Anschließen des Mobiltelefons an eine Batterie-Ladeeinrichtung auch eine elektrische Verbindung zwischen dem Mobiltelefonen und der Ankopplungseinheit oder anderen Einrichtungen in dem Kraftfahrzeug hergestellt wird.

Ein Vorteil der Integration einer Ankopplungseinrichtung in die Ankopplungseinheit besteht darin, dass die Ankopplungseinrichtung optimal in Bezug auf den Raum zur Aufnahme eines Mobiltelefons angeordnet und ausgerichtet werden kann.

Die Ankopplungseinrichtung, oder eine weitere Ankopplungseinrichtung der Ankopplungseinheit kann zum drahtlosen Ankoppeln des Mobiltelefons an eine Antenne (insbesondere eine Außenantenne des Kraftfahrzeugs) ausgestaltet sein. Über die Antenne können bei einem Betrieb des Mobiltelefons in einem Mobiltelefonnetz Funksignale zwischen dem Mobiltelefon und anderen Stationen des Mobiltelefonnetzes übertragen werden. Die Ankopplungseinrichtung kann eine oder mehrere Antennenstrukturen aufweisen. Insbesondere kann eine Antennenstruktur (z. B. über ein Koaxialkabel) mit einer Außenantenne des Kraftfahrzeugs verbunden sein bzw. werden. Auf diese Weise können Funksignale, die von dem Mobiltelefon ausgesendet werden von der Antennenstruktur im Innern des Kraftfahrzeugs empfangen werden, über die Verbindung zu der Außenantenne des Kraftfahrzeugs gelangen und von dieser ausgesendet werden. Dabei ist es optional außerdem möglich, dass die Signale nach ihrem Empfang von der Antennenstruktur, aber vor dem Aussenden über die Außenantenne verändert und/oder verarbeitet werden. Insbesondere können dabei den auszusendenden Informationen Zusatzinformationen hinzugefügt werden und/oder kann auf ein anderes Datenformat und/oder Übertragungsprotokoll übergegangen werden. Umgekehrt ermöglicht die Ankopplung des Mobiltelefons an die Antennenstruktur einen Empfang von Signalen, die zunächst von der Außenantenne empfangen werden, über die Verbindung zwischen der Außenantenne und der Antennenstruktur zu der Antennenstruktur übertragen werden und drahtlos von der Antennenstruktur zu der Empfangsantenne des Mobiltelefons übertragen werden, wobei die Sende- und Empfangsantenne des Mobiltelefons auch eine einzige Antenne sein kann. In entsprechender Weise, wie für Sendesignale beschrieben, kann nach dem Empfang der Empfangssignale von der Außenantenne, aber vor der Übertragung von der Antennenstruktur zu der Empfangsantenne des Mobiltelefons eine Verarbeitung und/oder Veränderung der in den Empfangssignalen enthaltenen Information durchgeführt werden.

Die Aussparung, in die das Mobiltelefon zumindest teilweise (und vorzugsweise vollständig) eingebracht werden kann, kann ein Aufnahmeraum in der Ankopplungseinheit sein, wobei der Aufnahmeraum eine Öffnung aufweist, durch die hindurch das Mobiltelefon ganz oder teilweise in den Aufnahmeraum einbringbar ist. Insbesondere können alle Wände des Aufnahmeraumes von der Ankopplungseinheit gebildet werden. In diesem Fall bildet die Ankopplungseinheit einen Hohlraum mit einer von außen zugänglichen Öffnung, durch die hindurch das Mobiltelefon in den Aufnahmeraum eingebracht werden kann bzw. aus dem Aufnahmeraum herausgenommen werden kann.

Alternativ kann die Aussparung aber z. B. an der Oberseite der Ankopplungseinheit ausgeformt sein, sodass die Ankopplungseinheit lediglich einen Teil der Wände des Aufnahmeraumes bildet. Ein anderer Teil der Wände wird in diesem Fall z. B. von Teilen des Kraftfahrzeugs gebildet, wenn die Ankopplungseinheit in das Kraftfahrzeug eingebaut ist.

Insbesondere bietet die Ausnehmung Raum zum wahlweisen Einbringen von Mobiltelefonen mit unterschiedlichen Abmessungen. Bezüglich des erfindungsgemäßen Verfahrens wird daher eine Ausgestaltung bevorzugt, bei der wahlweise Mobiltelefone mit unterschiedlichen Abmessungen in die Ausnehmung eingebracht werden.

Es wird bevorzugt, dass die Aussparung eine Auflagefläche zum Auflegen des Mobiltelefons aufweist, wobei die Auflagefläche durch ein rutschfestes Material gebildet ist. In diesem Fall sind keinerlei weitere Hilfsmittel erforderlich, um ein herausrutschen oder herausfallen des Mobiltelefons aus der Aussparung zu verhindern. Das rutschfeste Material ist z. B. ein Gummimaterial, vorzugsweise mit einer profilierten (z. B. Rillen und/oder Erhebungen aufweisenden) Oberfläche.

Alternativ oder zusätzlich wird jedoch auch bevorzugt, dass die Aussparung eine Auflagefläche zum Auflegen des Mobiltelefons aufweist, wobei die Auflagefläche durch einen erhöhten Rand berandet ist. Der Rand grenzt die Auflagefläche nach außen ab und ist insbesondere an der Öffnung ausgebildet, durch die hindurch das Mobiltelefon in die Aussparung bzw. in den Aufnahmeraum eingebracht werden kann.

Alternativ oder zusätzlich zu der Auflagefläche aus rutschfestem Material können Mittel vorgesehen sein, die verhindern, dass das Mobiltelefon unbeabsichtigt aus der Aussparung heraus gelangt. Insbesondere kann die Öffnung des Aufnahmeraumes durch einen Gegenstand (wie z. B. eine Klappe, die über ein Scharnier an die Ankopplungseinheit angelenkt ist) ganz oder teilweise versperrt werden. Es ist auch möglich, die Aussparung vor und/oder nach dem Einbringen des Mobiltelefons in den Aufnahmeraum zumindest teilweise mit elastischen Materialien auszufüllen. Z. B. kann der Aufnahmeraum teilweise mit zwei Blöcken aus Schaumstoff gefüllt sein, zwischen die das Mobiltelefon eingebracht werden kann und aufgrund der elastischen Verformung der Blöcke zwischen diesen gehalten wird.

Denkbar, wenn auch nicht bevorzugt, ist auch die Verwendung einer Haltekammer, die das Mobiltelefon in dem Aufnahmeraum festhält. In diesem Fall sollte die Halteklammer möglichst jedoch geeignet sein, verschiedene Mobiltelefon-Typen fest halten zu können.

Es ist auch möglich, dass zumindest ein Teil der Wände des Aufnahmeraumes durch einen Motor oder eine manuell bedienbare Bewegungsmechanik bewegt werden kann. Nach dem Einbringen des Mobiltelefons in den Aufnahmeraum kann der bewegliche Teil der Wände so bewegt werden, dass das Mobiltelefon an den Wänden und optional an anderen Gegenständen innerhalb des Aufnahmeraumes festgeklemmt wird. Zum Entnehmen des Mobiltelefons wird in umgekehrter Reihenfolge verfahren. Zunächst wird der bewegliche Teil der Wände so bewegt, dass das Mobiltelefon freikommt und dann wird das Mobiltelefon aus dem Aufnahmeraum entnommen.

Ein Vorteil der Erfindung besteht gerade darin, dass verschiedene Mobiltelefon-Typen über die Ankopplungseinrichtung an die Ankopplungseinheit angekoppelt werden können. Insbesondere wenn eine Antennenstruktur der Ankopplungseinrichtung (wie noch näher beschrieben wird) einen weiten Spielraum für die Anordnung des Mobiltelefons in dem Aufnahmeraum lässt (d.h. die Ankopplung über die Antennenstruktur auch dann gut funktioniert, wenn ein Mobiltelefon an verschiedenen Orten innerhalb des Aufnahmeraumes befindet und/oder in verschiedener Weise ausgerichtet ist), ist die Handhabung des Mobiltelefons wesentlich erleichtert. Der Benutzer muss nicht darauf achten, dass das Mobiltelefon in vorgegebener Weise in dem Aufnahmeraum angeordnet wird.

Für die drahtlose Ankopplung des Mobiltelefons an die Ankopplungseinheit wird zumindest eine Antenne in dem Mobiltelefon benötigt. Aktuelle Modelle von Mobiltelefonen enthalten z. B. zwei integrierte Antennen, eine für den Betrieb in Mobiltelefon-Netzen und eine für eine Ankopplung an externe Einrichtungen, z. B. gemäß dem Bluetooth-Standard.

Dabei befindet sich die Antenne des Mobiltelefons bzw. befinden sich die Antennen des Mobiltelefons vorzugsweise im Nahfeld einer Antennenstruktur der Ankopplungseinrichtung und/oder befindet sich die Antennenstruktur im Nahfeld der Antenne bzw. der Antennen des Mobiltelefons. Der Abstand zwischen der Antenne bzw. den Antennen des Mobiltelefons und der Antennenstruktur beträgt daher z. B. höchstens 10 cm, vorzugsweise höchstens 5 cm. Dadurch können geringe Kopplungsverluste bei der Ankopplung des Mobiltelefons an die Antennenstruktur erreicht werden.

Es wird ferner vorgeschlagen, die Antennenstruktur zum drahtlosen Übertragen von Signalen zu und/oder von der Sende- und/oder Empfangsantenne des Mobiltelefons so auszugestalten, dass die Antennenstruktur breitbandig ist. Insbesondere ist die Antennenstruktur ausgestaltet, die Signale in einem Frequenzbereich zu senden und/oder zu empfangen, der die Frequenzbänder von zumindest zwei verschiedenen Mobilfunknetzen und/oder zumindest einem Mobilfunknetz und einem weiteren Frequenzband enthält. Bei den Frequenzbändern handelt es sich also z. B. um die Frequenzbänder von zwei verschiedenen GSM-Netzen, einem GSM-Netz und einem UMTS-Netz, zwei oder mehr UMTS-Netzen oder einem Mobilfunknetz und dem Frequenzband gemäß Bluetooth-Standard.

Die Antennenstruktur (bei der es sich auch um eine örtlich verteilte Antennenstruktur handeln kann) hat vorzugsweise die Eigenschaften, die im Folgenden beschrieben werden.

Bevorzugt wird, dass die Abmessungen (insbesondere die Länge und/oder Breite) von elektrisch leitfähigen Bereichen (d.h. Antennen), die die Antennenstruktur bilden, in der Größenordnung von 10 cm liegen. Dies heißt, dass bei verschiedenen Ausführungsformen der Antennenstruktur die Länge und/oder Breite z. B. bis zu 1 cm klein und/oder z. B. bis zu 1 m groß sein kann. Die Frequenzen, mit denen die Funksignale innerhalb eines Mobiltelefonnetzes übertragen werden, liegen heutzutage üblicherweise im Bereich von ca. 450 MHz (GSM, Global System for Mobile Communication, in Tansania) bis 2200 MHz (UMTS, Universal Mobile Telecommunications System). Für zukünftige Mobilfunknetze (z. B. WLAN-Netze) sind auch höhere Signalfrequenzen möglich. Die Übertragungsfrequenzen für Signale gemäß Bluetooth-Standard liegen im Bereich von 2400 bis 2500 MHz.

Die bevorzugte Ausführungsform der Antennenstruktur der Ankopplungseinrichtung soll für den Empfang und/oder das Senden in mehreren, vorzugsweise in allen Frequenzbändern der genannten Systeme geeignet sein, zumindest im Frequenzbereich von 850 MHz bis 2500 MHz. Damit ist es möglich, nicht nur die Signale zum Betreiben des Mobiltelefons in einem Mobilfunknetz zu übertragen sondern außerdem noch Signale zum Betrieb in einem anderen Mobilfunknetz und/oder gemäß Bluetooth-Standard zu übertragen. Gemäß Bluetooth-Standard können außer den Signalen für den Freisprech-Betrieb zum Beispiel Steuersignale zur Steuerung des Betriebes des Mobiltelefons (z. B. Wählen einer Teilnehmernummer durch Sprachsignale oder Bedienung einer Tastatur an anderer Stelle als am Mobiltelefon) übertragen werden. Insbesondere kann die Freisprecheinrichtung ausgestaltet sein, diese Steuersignale zu erzeugen.

Die Antennenstruktur ist wie oben beschrieben vorzugsweise so ausgestaltet, dass sie Frequenzsignale in einem Frequenzband breitbandig senden und/oder empfangen kann. Es ist auch möglich, dass die Antennenstruktur mehrere Frequenzbänder aufweist, in denen sie breitbandig senden und/oder empfangen kann, wobei die Frequenzbereiche voneinander getrennt sein können oder einander überlappen können. Jedes Frequenzband oder der gesamte Frequenzbereich werden durch eine obere Grenzfrequenz und eine untere Grenzfrequenz begrenzt. Unter breitbandig wird verstanden, dass innerhalb des Frequenzbereichs zwischen der oberen Grenzfrequenz fo und der unteren Grenzfrequenz fu der Welligkeitsfaktor s oder das Stehwellenverhältnis VSWR, das aus den Amplituden der Wellen bestimmt wird, die aus der Antennen-Versorgungsleitung hin zur Antenne laufen (Amplitude Uh) und aus der Antenne in die Antennen-Versorgungsleitung zurücklaufen (Amplitude Ur), bezogen auf eine Oktave den Faktor 2 nicht überschreitet, d.h.

VSWR <= 2 falls fo/fu = 2, wobei

$$VSWR = s = (Uh + Ur) / (Uh - Ur)$$

Bevorzugt wird daher, dass die Antennenstruktur in diesem Sinne breitbandig für den Empfang und/oder das Senden von Signalen in den zuvor genannten Frequenzbereichen des GSM, des UMTS ein zukünftiges WLAN-Mobilfunknetz und/oder für Bluetooth ist.

Die Antennenstruktur kann eine beliebige breitbandige Antennenstruktur sein, die aus der Antennentechnik bekannt oder noch unbekannt ist. Insbesondere kann die Antennenstruktur

- selbstähnlich sein,
- selbstkomplementär sein,
- eine Form aufweisen, die bei einer Maßstabsänderung unverändert bleibt, und/oder
- mehrere Resonanzelemente aufweisen, wobei sich die Abmessungen der Resonanzelemente zueinander wie die Elemente einer geometrischen Reihe verhalten.

Eine Antennenstruktur ist selbstähnlich, wenn sich elektrisch leitfähige und/oder nicht leitfähigen Bereiche der Antennenstruktur einander in ihrer Form (nicht aber zwingend auch in ihrer Größe) ähneln oder gleichen. Selbst ähnliche Strukturen können Fraktale sein. Fraktale sind insbesondere aus der Chaostheorie bekannt. Z. B. weist die Antennenstruktur eine Vielzahl von verschiedenen örtlichen Gebieten auf, in denen elektrisch leitfähigen Bereiche gleicher Form wie in den anderen Gebieten angeordnet sind.

Eine Antennenstruktur ist selbstkomplementär, wenn Größe und Form von elektrisch leitfähigen Bereichen der Antennenstruktur gleich der Größe und Form von elektrisch nicht leitfähigen Bereichen im örtlichen Gebiet (bei zweidimensionalen Strukturen in der Fläche) der Antennenstruktur sind. Ein Beispiel ist eine zweidimensionale Antennenstruktur, bei der von einem Zentrum der Antennenstruktur Grenzlinien zwischen elektrisch leitfähigen und nicht leitfähigen Bereichen der Struktur linear, d.h. strahlenförmig ausgehen, wobei die so gebildeten (im Bereich des Zentrums) dreieckförmigen elektrisch leitfähigen und nicht leitfähigen Bereiche gleich groß sind, also insbesondere gleich große Winkelbereiche einnehmen.

Eine Antennenstruktur weist eine Form auf, die bei einer Maßstabsänderung unverändert bleibt, wenn für verschiedene Signalfrequenzen (für die die Antennenstruktur breitbandig ist) jeweils Strukturelemente der Antennenstruktur vorhanden sind, die normiert auf die Signalfrequenz gleich groß sind. Ein Beispiel ist eine spiralförmige Antenne. Ein nahe dem Zentrum der Spirale liegender Bereich der Antennenstruktur ist bezogen auf eine kleine Signalfrequenz genauso groß und gleich geformt wie ein weiter außen gelegener Bereich der spiralförmigen Antennenstruktur für eine größere Signalfrequenz.

Z. B. können die elektrisch leitfähigen Bereiche der Antennenstruktur sich in einer Ebene entlang einer Oberfläche eines plattenförmige Trägers erstrecken, sodass die Antennenstruktur im Wesentlichen für den Empfang und/oder das Senden von Signalen in Richtungen quer zu der Oberfläche geeignet ist. Der Träger kann z. B. eine aus der Elektrotechnik bekannte Platine sein, an deren Oberfläche mit an sich bekannten Strukturierungstechniken die gewünschten elektrisch leitfähigen Bereiche der Antennenstruktur erzeugt werden. Der elektrische Anschluss an die Antennen-Zuleitung kann dann vorteilhafter Weise auf der Rückseite der Platine bzw. des Trägers erfolgen.

Ein Beispiel für den Fall, dass sich Abmessungen der Resonanzelemente (d. h. der Strukturelemente eine Antennenstruktur) zueinander wie die Elemente einer geometrischen Reihe verhalten, wird im Folgenden gegeben: Besitzt ein Resonanzelement z. B. die Länge L0, so ist das nächst kleinere t $\times$ L0 lang, das dritte t $\times$ 2L0 lang usw., wobei t auch der Stufenfaktor genannt wird:

$$Ln = L0 \times t^n,$$

wobei n eine natürliche Zahl ist.

Eine bevorzugte Ausgestaltung der Ankopplungseinheit weist ein elektromagnetisch abschirmendes Gehäuse auf, welches den Aufnahmeraum zur Aufnahme des Mobiltelefons enthält. Dabei kann die Öffnung zum Einbringen des Mobiltelefons in den Aufnahmeraum offen bleiben, d.h. nicht abgeschirmt sein. Es ist aber auch eine Ausführungsform mit einem elektromagnetisch abschirmenden Verschluss zum Verschließen der Öffnung möglich.

Unter elektromagnetisch absorbierend und/oder elektromagnetisch abschirmend wird in dieser Beschreibung verstanden, dass elektromagnetische Wellen, die durch das Fixierungselement bzw. durch Gehäuseteile hindurchtreten möchten, in ihrer Amplitude signifikant gedämpft werden. In besonderer Ausgestaltung ist die elektromagnetische Abschirmung speziell für ein oder mehrere der Frequenzbänder ausgelegt, in denen Mobiltelefone ihre Funksignale senden und/oder empfangen. Dabei kann es sich um die Frequenzbänder handeln, die innerhalb eines Mobiltelefonnetzes genutzt werden, und/oder um die Frequenzbänder für eine zusätzliche Funkschnittstelle, beispielsweise nach dem Bluetooth-Standard.

Die Öffnung, die das Gehäuse zwangsläufig zum Einbringen und Herausnehmen des Mobiltelefons haben muss, kann zumindest teilweise durch ein elastisch verformbares Element verschlossen werden. Dabei ist das elastisch verformbare Element einerseits als Fixierungselement ausgestaltet, welches das Mobiltelefon in dem geschlossenen Zustand der Öffnung bzw. in dem geschlossenen Zustand des Gehäuses mechanisch in einer momentanen Position fixiert. Andererseits ist das Fixierungselement vorzugsweise elektromagnetisch absorbierend ausgestaltet.

Dadurch, dass ein elastisch verformbares Fixierungselement (oder auch eine Mehrzahl davon) verwendet wird, braucht das Mobiltelefon nicht an einer bestimmten, vordefinierten Position innerhalb des Gehäuses angeordnet zu werden. Vielmehr kann das Mobiltelefon in beliebiger Weise in das Gehäuse eingebracht werden und kann das Fixierungselement dazu verwendet werden, das Mobiltelefon in der beliebigen Position, die es gerade einnimmt, zu fixieren.

Optional sind auch andere Teile des Gehäuses speziell dazu ausgestaltet, das Mobiltelefon in seiner beliebigen, momentanen Position zu fixieren, zumindest wenn auch das zumindest eine Fixierungselement an dem Mobiltelefon anliegt und dieses festhält. Zum Beispiel kann das Gehäuse ganz oder teilweise mit Materialien ausgekleidet werden, die ein Verrutschen des Mobiltelefons verhindern oder zumindest erschweren (s.o. die Auflagefläche aus rutschfestem Material). In einer konkreten Ausgestaltung ist zumindest ein Teil des Gehäuses innen mit einem Schaumstoffmaterial versehen, auf das das Mobiltelefon aufgelegt werden kann und/oder an das das Mobiltelefon angedrückt werden kann, so dass in der fixierten Position der Schaumstoff durch das Mobiltelefon elastisch verformt wird. Die elastischen Gegenkräfte fixieren dann das Mobiltelefon oder erschweren zumindest eine Veränderung der momentanen Position des Mobiltelefons. Auch wirkt der Schaumstoff dämpfend für Stöße, die von dem Gehäuse auf das Mobiltelefon einwirken.

Bevorzugt wird, dass auch das Fixierungselement einen Schaumstoff aufweist, in dem bevorzugt ein Stoff oder Stoffgemisch verteilt ist, der bzw. das elektromagnetisch absorbierende Eigenschaften hat.

Außerdem weist die Ankopplungseinheit vorzugsweise zumindest einen Anschluss zum Übertragen eines Antennensignals von einer Antenne des Kraftfahrzeugs zu dem Mobiltelefon und/oder umgekehrt auf. Auf diese Weise kann das Mobiltelefon über die Fahrzeugantenne betrieben werden, während es in dem Gehäuse angeordnet ist.

Vorzugsweise sind weitere Schnittstellen zwischen dem Mobiltelefon und Einrichtungen des Kraftfahrzeugs vorhanden, z. B. eine Schnittstelle, damit ein elektrochemischer Energiespeichern (z. B. Batterie oder Akku) des Mobiltelefons über das Bordnetzen des Kraftfahrzeuges aufgeladen werden kann.

Der Anschluss zum Übertragen des Antennensignals ist bei einer bevorzugten Ausgestaltung über eine elektrische Leitung (z. B. ein Koaxialkabel) mit einer Antennenstruktur im Inneren des elektromagnetisch abschirmenden Gehäuses verbunden. Die Antennenstruktur ermöglicht es, die zwischen ihr und dem Mobiltelefon auszutauschenden Antennensignale innerhalb des Gehäuses drahtlos zu übertragen. Der Benutzer braucht daher keinen Antennenstecker, der dem Gehäuse zugeordnet ist, mit dem Mobiltelefon zu verbinden, wenn er das Mobiltelefon in das Gehäuse einbringt.

Unter einer Fixierung des Mobiltelefons in einer momentanen Position wird insbesondere verstanden, dass das Fixierungselement bei der Fixierung an dem Mobiltelefon anliegt und dabei elastisch verformt wird, so dass die Gegenkraft, die der elastischen Verformung entgegenwirkt auf das Mobiltelefon einwirkt, so dass das Mobiltelefon fixiert wird. Unter Fixierung ist jedoch nicht zwangsläufig eine starre Fixierung zu verstehen. Vielmehr kann z. B. aufgrund äußerer Kräfte trotz der Fixierung eine Bewegung des Mobiltelefons aus seiner momentanen Position heraus stattfinden. Insbesondere kann z. B. beim Bremsen des Kraftfahrzeugs das Mobiltelefon aufgrund seiner Trägheit temporär oder dauerhaft verschoben werden. Vorzugsweise ist die Verschiebung jedoch nur temporär und durch das Fixierungselement und/oder durch andere elastische Komponenten der Anordnung abgefedert.

Die Ankopplungseinheit kann insbesondere eine bautechnische Einheit sein, die außer der Freisprecheinrichtung und der Ankopplungseinrichtung weitere Einrichtungen aufweist, z.B. einen Radioempfänger zum Empfang von Radioprogrammen, ein Navigationssystem zur Unterstützung der Navigation des Fahrzeugs, ein Musikwiedergabegerät, insbesondere mit einem MP3-Spieler, einen CD- und/oder DVD-Spieler oder ein Lesegerät für andere Daten- und/oder Audiospeichermedien, ein Verkehrs-Informationssystem zum Erhalt und/oder zur Weiterleitung von Informationen zur Straßenverkehrslage und/oder zumindest Teile einer Anlage des Kraftfahrzeugs zur Ausgabe von Audioinformationen über Lautsprecher, z.B. einen Audioverstärker oder eine Verstärker-Endstufe.

Zur Erfindung gehört ferner ein Verfahren zum Ankoppeln eines Mobiltelefons an Einrichtungen eines Kraftfahrzeugs. Ausgestaltungen ergeben sich aus dieser Beschreibung und aus den beigefügten Patentansprüchen.

Bevorzugte Ausführungsformen und weitere Merkmale, die optional zusätzlich zu den bereits genannten Merkmalen vorhanden sein können, werden nun unter Bezugnahme auf die beigefügte Zeichnung beschrieben. Die einzelnen Figuren der Zeichnung zeigen:

Fig. 1    eine schematische perspektivische Ansicht einer Ankopplungseinheit zum Einbau in einen hinsichtlich seiner Abmessungen genormten Schacht in einem Kraftfahrzeug,

Fig. 2    einen Schnitt durch die in Fig. 1 dargestellte Ankopplungseinheit,

Fig. 3    eine Ansicht eines Fahrzeug-Innenraums mit einer in das Armaturenbrett eingebauten Ankopplungseinheit,

Fig. 4    eine Draufsicht auf einer Vorderseite eines Trägers, der eine Antennenstruktur trägt,

Fig. 5    einen Ausschnitt der in Fig. 7 dargestellten Antennenstruktur im Zentrum der Struktur.

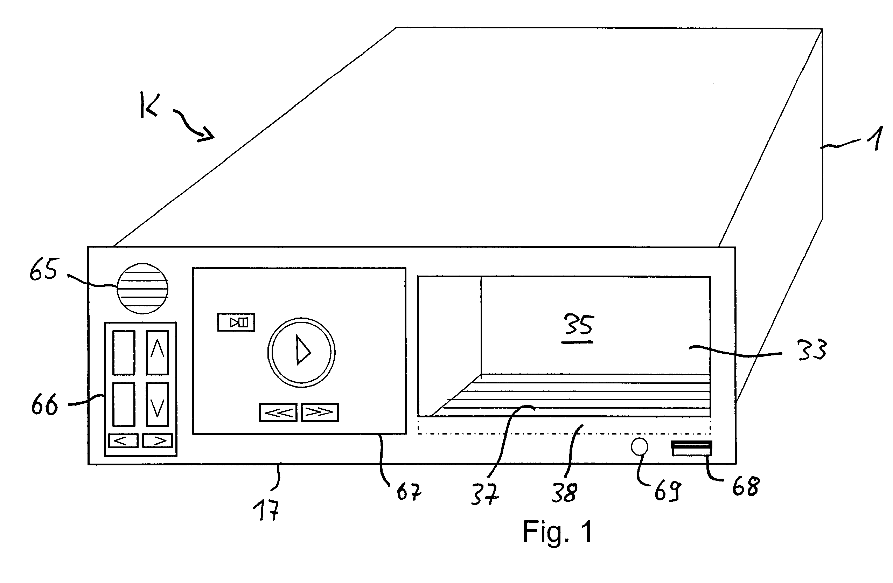

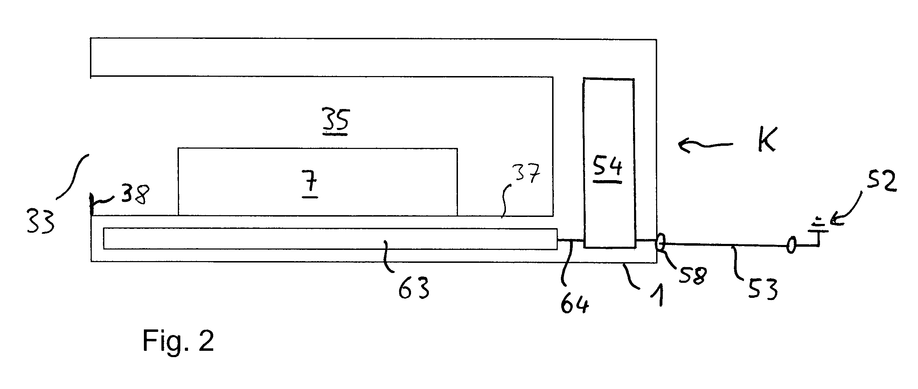

Fig. 1 zeigt eine erste Ausführungsform einer Ankopplungseinheit K mit einem quaderförmigen Gehäuse 1, das vorzugsweise aus Metall besteht, und mit einer Blende 17. In die Blende 17 sind ein Bedienfeld 66 mit verschiedenen Bedienelementen zur Bedienung der Freisprecheinrichtung, eine Öffnung für ein Mikrofon 65 zur Erzeugung von akustischen Signalen und ein Bedienfeld 67 mit Bedienelementen zur Bedienung eines Audio-Wiedergabegerätes integriert. Die Ankopplungseinheit K enthält folglich außer der in Fig. 2 schematisch dargestellten Freisprecheinrichtung 54 auch die Musik-Wiedergabeeinrichtung, z.B. mit einem MP3-Spieler. Ferner ist die Blende 17 auch ein Anschluss 68 zum Anschließen eines Ladekabels integriert, mit dem ein Akku eines Mobiltelefons aufgeladen werden kann. Beim Einbau der Ankopplungseinheit K in das Kraftfahrzeug wird die Einheit daher mit dem elektrischen Bordnetz des Fahrzeugs verbunden, so dass die für die Aufladung des Akkus erforderliche Energie aus dem Bordnetz entnommen werden kann. Außerdem wird für den Betrieb der Einheit K ebenfalls elektrische Energie aus dem Bordnetz entnommen.

Weiterhin ist in die Blende 17 ein weiterer Anschluss 69 zum elektrischen Anschließen von externen Einrichtungen, z.B. einem Kopfhörer oder einem externen Musik-Wiedergabegerät vorgesehen. So kann z.B. über den Anschluss 69 in einem mobilen MP3-Spieler gespeicherte Audioinformation in die Einheit K übertragen werden und z.B. mit Hilfe der integrierten Musik-Wiedergabeeinrichtung akustisch wiedergegeben werden.

Nicht aus Fig. 1 erkennbar sind Lautsprecher, da die Einheit K vorzugsweise mit Lautsprechern des Kraftfahrzeugs verbunden wird. Bei anderen Ausführungsformen kann die Ankopplungseinheit jedoch auch mit zumindest einem eigenen Lautsprecher zur Wiedergabe von Audiosignalen aufweisen.

Die Einheit K wird entsprechend ihrer quaderförmigen Gestaltung mit Blenden in genormte Aussparungen (Schächte) in Kraftfahrzeugen eingebaut. Wenn größere genormte Schächte zum Einbau zur Verfügung stehen, kann auch eine entsprechend größere Ankopplungseinheit eingebaut werden. Auch der verdeckte Einbau, d.h. ohne eine Ansicht der eingebauten Ankopplungseinheit von dem Fahrzeug-Innenraum zu ermöglichen, ist möglich. In diesem Fall können zusätzliche Bedienelemente, Mikrofone und/oder Lautsprecher verwendet werden, die nicht in die Ankopplungseinheit integriert sind. In jedem Fall aber muss ein Zugang zu dem Aufnahmeraum zum Aufnehmen zumindest eines Mobiltelefons aus dem Fahrzeug-Innenraum möglich sein.

Bei der in Fig. 1 und Fig. 2 dargestellten Ankopplungseinheit K befinden sich auf der Rückseite (Fig. 1 stellt die auf der Vorderseite angeordnete Blende 17 dar) vorzugsweise ein Anschluss für eine Verbindung mit einer Außenantenne des Kraftfahrzeugs, ein Anschluss zum Anschließen der Einheit K an das elektrische Bordnetz und/oder Anschlüsse zum Anschließen an weitere elektrische oder elektronische Einheiten des Fahrzeugs, z.B. eine Stereoanlage des Fahrzeugs, in das Fahrzeug eingebaute Lautsprecher.

Wie aus Fig. 1 in der Vorderansicht und aus Fig. 2 in der Schnittdarstellung erkennbar ist, weist die Einheit K einen Aufnahmeraum 35 zum Aufnehmen zumindest eines Mobiltelefons 7 auf. Der Aufnahmeraum 35 ist in dem Ausführungsbeispiel quaderförmig ausgeformt, wobei die Front zur Vorderseite der Einheit K offen ist und die anderen fünf ebenen Wände durch die Ankopplungseinheit K gebildet werden. Dabei ist der Boden 37 des Aufnahmeraums 35 durch ein mit Rillen versehenes rutschfestes, vorzugsweise Gummimaterial, gebildet. Außerdem weist die Frontseite des Aufnahmeraums 35 einen erhöhten Rand 38 auf, so dass das auf dem Boden 37 liegende Mobiltelefon 7 nicht unbeabsichtigt aus dem Aufnahmeraum 35 rausrutschen kann.

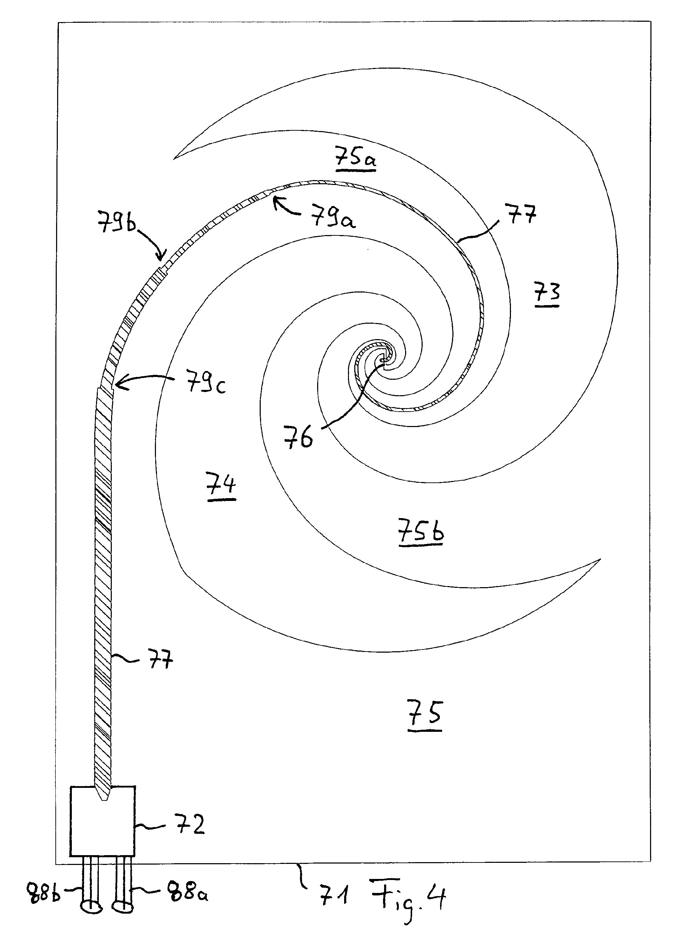

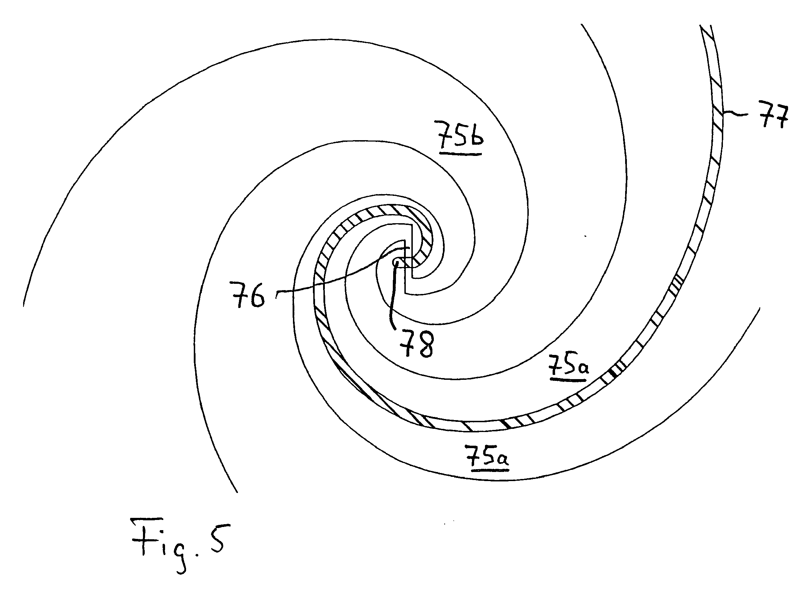

Fig. 2 zeigt, dass sich unterhalb des Bodens 37 eine Antennenstruktur 63 befindet, die z.B. aus einem nicht elektrisch leitfähigen plattenförmigen Träger und auf der nach oben weisenden Oberfläche des Trägers gebildeten elektrisch leitfähigen Struktur besteht. Ferner können noch weitere Merkmale der Struktur vorhanden sein, z.B. Anschlussleitungen, die ebenfalls auf der Oberfläche des Trägers aufgebracht sind. Auf ein Ausführungsbeispiel wird nach anhand von Fig. 4 und Fig. 5 eingegangen.

Fig. 2 zeigt auch, dass die Antennenstruktur 63 über eine Verbindung 64 mit der Freisprecheinrichtung 54 verbunden ist. Über die Verbindung 64 kann die Freisprecheinrichtung 54 die von der Antennenstruktur 63 empfangenen Signale erhalten und verarbeiten. Z.B. koppelt sie daraus die für den Freisprechbetrieb erforderlichen Signale aus und lässt aber Signale zur Weiterleitung an eine Außenantenne 52 des Kraftfahrzeugs passieren. Daher ist in dem Ausführungsbeispiel an einen Antennenanschluss 58 der Einheit K ein Antennenkabel 53 angeschlossen, welches zu der Außenantenne 52 führt.

Insbesondere können auch die Signale, die von der Freisprecheinrichtung 54 über die Antennenstruktur 63 drahtlos zu dem Mobiltelefon 7 übertragen werden sollen, über die Verbindung 64 übertragen werden.

Der Anschluss 68 kann beispielsweise eine USB-A-Buchse sein, in die ein Ladestecker zum Aufladen der Batterie des Mobiltelefons 7 eingesteckt werden kann.

Die in Fig. 1 und 2 dargestellte und zuvor beschriebene Anordnung wird beispielsweise wie folgt betrieben: Ein Benutzer legt nach dem Einsteigen in das Kraftfahrzeug sein Mobiltelefon 7 durch die Öffnung 33 in den Aufnahmeraum 35 und schaltet das Mobiltelefon 7 ein. Alternativ dazu ist das Mobiltelefon 7 bereits eingeschaltet. Die Antennenstruktur 63 empfängt von der Mobiltelefonantenne ausgesendete Signale, die über eine Leitungsverbindung zu der Freisprecheinrichtung 54 übertragen werden. Die Einrichtung 54 erkennt auf diese Weise, dass ein Mobiltelefon angekoppelt wurde, lässt die gesendeten Signale über die Antennenleitung 53 zu der Außenantenne 52 durch und beginnt damit, eine zusätzliche Bluetooth-Funkverbindung zu dem Mobiltelefon 7 aufzubauen. Für diese Bluetooth-Verbindung wird wiederum die drahtlose Verbindung zwischen der Antennenstruktur 63 und der Mobiltelefonantenne genutzt. Die Bluetooth-Verbindung kann nun für an sich bekannte Anwendungen, wie z. B. die Steuerung des Mobiltelefons 7 durch Bedienung des Bedienteils 66 oder lediglich für den Anschluss des Mobiltelefons 7 an die Freisprecheinrichtung 54 verwendet werden.

Beim Betrieb der Freisprecheinrichtung 54 hört der Benutzer seinen Gesprächspartner über die Fahrzeuglautsprecher, die an die Freisprecheinrichtung 54 angeschlossen sind. Dabei werden die von dem Gesprächspartner gesprochenen Worte als Sprachsignale über die bereits beschriebene Telefonverbindung, d. h. über die Außenantenne 52, die Antennenleitung 53, die Verbindung 64, die Antennenstruktur 63 und das Mobiltelefon 7 empfangen und von dem Mobiltelefon 7 über die Antennenstruktur 63 und über die Freisprecheinrichtung 54 an die Fahrzeug Lautsprecher ausgegeben. Die entsprechenden Umsetzungen der Sprachsignale, z. B. zur Übertragung von dem Mobiltelefon 7 zu der Antennenstruktur 63 oder innerhalb der Freisprecheinrichtung 54, sind an sich aus dem Stand der Technik bekannt und werden daher hier nicht näher beschrieben. Alternativ kann auch die Ankopplungseinheit K zumindest einen Lautsprecher aufweisen. Es muss daher nicht unbedingt eine Verbindung zu Fahrzeuglautsprechern hergestellt werden.

Umgekehrt werden die von dem Benutzer gesprochenen Worte von dem in die Freisprecheinrichtung 54 integrierten Mikrofon 65 aufgenommen, entsprechende Audiosignale zu der Freisprecheinrichtung 54 übertragen, von dieser über die Antennenstruktur 63 zu dem Mobiltelefon 7 übertragen und von dem Mobiltelefon 7 über die bereits beschriebene Telefonverbindung über die Außenantenne 52 ausgesendet.

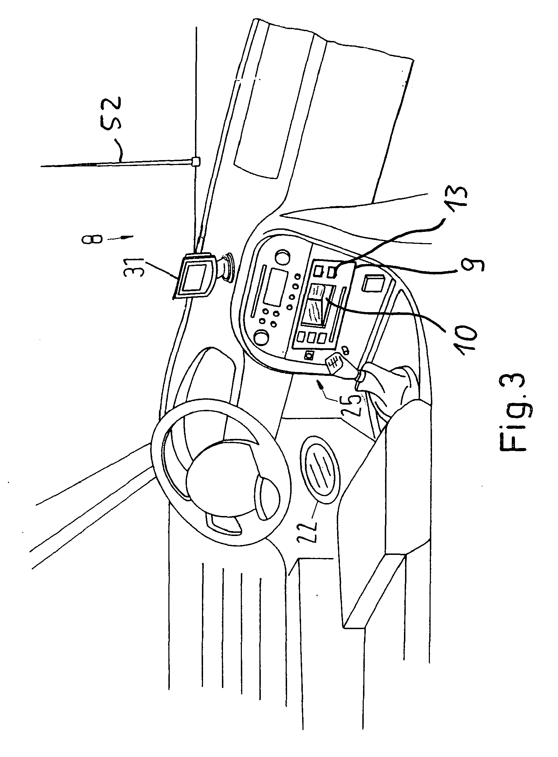

Fig. 3 zeigt, wie ein weiteres Ausführungsbeispiel einer erfindungsgemäßen Ankopplungseinheit 9 in die Bedienkonsole ("Armaturenbrett") eines Personenkraftwagens eingebaut ist. Die Ankopplungseinheit 9 weist Bedienelemente 13 und einen Aufnahmeraum 10 zum Aufnehmen zumindest eines Mobiltelefons auf. Der Aufnahmeraum 10 ist jedoch anders als der Aufnahmeraum 35 in horizontaler Richtung zentral in der Ankopplungseinheit 9 angeordnet. Wie durch einen Schlitz unter dem Aufnahmeraum 10 angedeutet ist, ist in diese Ankopplungseinheit 9 ein Laser zum lesen von optischen Datenträgern, z.B. CDs oder DVDs, integriert.

Optional ist wie in Fig. 3 dargestellt in dem Kraftfahrzeug ein Display 31 vorhanden, welches an die Ankopplungseinheit 9 angeschlossen werden kann, um Informationen aus dem Betrieb der Freisprecheinrichtung oder aus einem anderen Betrieb der Ankopplungseinheit 9 darzustellen.

Aus Fig. 3 ist auch die Außenantenne 52 des Kraftfahrzeugs 8 erkennbar, welche an die Ankopplungseinheit 9 angeschlossen werden kann, um das durch die Ankopplungseinheit angekoppelte Mobiltelefon an die Außenantenne 52 anzuschließen.

Unter Bezugnahme auf Fig. 4 und Fig. 5 wird nun ein Ausführungsbeispiel der Antennenstruktur einer Ankopplungseinrichtung beschrieben, die insbesondere die Antennenstruktur 63 der Ankopplungseinrichtung gemäß Fig. 1 und Fig. 2 sein kann. Die Antennenstruktur kann eine flache, im Wesentlichen zweidimensionale Struktur sein, deren Oberflächennormale sich z. B. etwa senkrecht zu dem Boden des Aufnahmeraumes für das Mobiltelefon erstreckt. In der Darstellung von Fig. 4 verläuft diese Oberflächennormalen senkrecht zur Figurenebene. Die Antennenstruktur ist in einem geringen Abstand zu dem Boden angeordnet. Der Abstand ist z. B. kleiner als 10 cm, vorzugsweise kleiner als 5 cm.

Daher kann sich die Mobiltelefonantenne in dem Ausführungsbeispiel von Fig. 1 und Fig. 2 insbesondere im Nahfeld der Antennenstruktur 63 befinden, bezogen auf die höchste Grenzfrequenz der Antennenstruktur 63, die insbesondere gleich der höchsten Frequenz der Frequenzbereiche ist, in denen die Antennenstruktur Signale von dem Mobiltelefon 7 empfängt oder an dieses überträgt.

Unabhängig von der konkret gewählten Ausführungsform kann insbesondere bei Verwendung einer zweidimensionalen Antennenstruktur (als Teil der Ankopplungseinrichtung) ein zusätzlicher Reflektor zur Reduzierung der Antennenverluste durch Abstrahlung in Richtung der Rückseite der Antennenstruktur eingesetzt werden. Der Reflektor reflektiert die zur Rückseite (d. h. zu der dem Mobiltelefon abgewandten Seite) von der Antennenstruktur abgestrahlten Wellen in Richtung der Vorderseite. Die Vorderseite liegt bei dem in Fig. 2 dargestellten Ausführungsbeispiel oben, in Richtung des Mobiltelefons 7.

Z. B. kann der Reflektor an dem Träger der Antennenstruktur angeordnet sein, z. B. als zusätzliche metallische Schicht als Teil einer Platine mit mehr als zwei Schichten, in denen sich elektrisch leitfähige Bereiche befinden. In einer der Schichten ist z. B. die eigentliche Antennenstruktur angeordnet, in einer zweiten Schicht die Zuleitung wie z. B. in Figur 4 dargestellt und in einer dritten, darunter liegenden Schicht der Reflektor. Der Reflektor kann jedoch auch als separates Bauteil in einem Abstand zur Rückseite der Antennenstruktur angeordnet sein, z. B. als Metallplatte, die bei dem Ausführungsbeispiel von Figur 1 und Figur 2 zwischen der Antennenstruktur 63 und dem Boden des Gehäuses 1 angeordnet ist. Insbesondere bei metallischem Gehäuse kann aber auch der Gehäuseboden selbst, z. B. der Boden des Gehäuses 1 gemäß Figur 1 und 2 als Reflektor wirken.

Im Folgenden soll noch auf einen Vorteil eingegangen werden, der bei Verwendung einer Antennenstruktur besteht, die zirkular polarisierte Wellen abstrahlt. Insbesondere ist dies bei Antennenstrukturen mit spiralförmigen leitfähigen und nicht leitfähigen Bereichen der Fall, z. B. bei der Ausführungsform gemäß Figur 4 und 5. Alternativ lassen sich linear polarisierte Wellen aber auch z. B. mit zwei linearen, geradlinigen metallischen Bereichen erzeugen, die 90 ° gegeneinander gedreht orientiert sind und mit einem Phasenunterschied von 90 ° gespeist werden.

Antennenstrukturen, die zirkular polarisierte Wellen erzeugen bzw. deswegen auch in beliebiger Richtung linear polarisierte Wellen mit hohem Wirkungsgrad empfangen können, eignen sich besonders zur Ankopplung von Mobiltelefonen, die verschiedene Orientierungen der Mobiltelefonantenne erlauben. Insbesondere kann daher die Ankopplungseinheit gemäß Figur 1 und 2 in vorteilhafter Weise mit einer solchen Antennenstruktur kombiniert werden.

Fig. 4 und Fig. 5 zeigen eine bevorzugte Ausführungsform einer Antennenstruktur, die einen plattenförmigen Träger 71 und an einer Seite (ohne Beschränkung der Allgemeinheit: die Vorderseite) in Streifenleitertechnik ausgeführte Spiralarmstrukturen aufweist. Unter Streifenleitertechnik wird verstanden, dass auf der Oberfläche der Trägerstruktur (z. B. einer Platte) streifenförmige Bereiche, die sich entlang der Oberfläche des Trägers erstrecken, aus elektrisch leitfähigem Material bestehen, während andere Bereiche der Oberfläche des Trägers nicht mit elektrisch leitfähigem Material abgedeckt sind. Z. B. kann der Träger eine Schicht Metall an seiner Oberfläche tragen, die gleichmäßig dick ist und sich über die gesamte Oberfläche an der Vorderseite erstreckt. Zur Herstellung der Streifenleitungsstruktur können dann z. B. diejenigen Bereiche, die frei von elektrisch leitfähigem Material sein sollen, demetallisiert werden, z. B. unter Verwendung von ätzenden Materialien oder durch Schleifen und Polieren. Die elektrisch leitfähigen Bereiche können alternativ aber auch örtlich selektiv aufgebracht werden.

Der Träger 71 ist beispielsweise aus glasfaserverstärktem Epoxidharz hergestellt, wie es in der Leiterplattentechnik für elektrische und elektronische Schaltungen üblich ist. Alternativ kann der Träger jedoch auch aus jedem anderen dielektrischen Material bestehen, z. B. aus Keramik oder mit Keramikpulver vermischtem Polytetrafluorethylen.

Die in Fig. 4 dargestellte Struktur weist einen ununterbrochenen Bereich 75 auf, der von der elektrisch leitfähigen Schicht gebildet wird. Die von elektrisch leitfähigem Material freien Bereiche haben die Form von zwei Spiralarmen und sind mit den Bezugszeichen 73, 74 bezeichnet, wobei die Bereiche 73, 74 im Zentrum der Spirale durch einen Übergangsbereich 76 miteinander verbunden sind (Fig. 5). Dementsprechend erstrecken sich zu den Bereichen 73, 74 komplementäre Bereiche 75a, 75b, die Teil des Bereichs 75 sind, bis in das Zentrum der Spirale, sind dort jedoch durch den Übergangsbereich 76 elektrisch voneinander getrennt. Die Spiralarme 75a, 75b sind daher lediglich über den Außenbereich des Bereichs 75 elektrisch miteinander verbunden.

Auf der Rückseite des Trägers 71 erstreckt sich, wie durch einen schraffierten Spiralarm in Fig. 4 und Fig. 5 dargestellt ist, ein Zuleitungsbereich 77 aus elektrisch leitfähigem Material. Bei dem Zuleitungsbereich 77 handelt es sich also wiederum um einen Streifen. Dieser Streifen verläuft unmittelbar gegenüberliegend von einem der metallischen Spiralarme 75a oder 75b, hier gegenüberliegend 75a. Der Streifen 77 erstreckt sich bis zum Zentrum der Spirale und überquert dort aber den Bereich, der dem Übergangsbereich 76 unmittelbar gegenüberliegt (Fig. 5). In dem dargestellten Ausführungsbeispiel ist der Streifen 77 im Zentrum elektrisch mit einer Verbindung 78 verbunden, die sich durch das Material des Trägers 71 hindurch erstreckt und den Streifen 77 elektrisch mit dem zentrumsseitigen Ende des Spiralarms 75b verbindet.

Alternativ dazu kann die Durchkontaktierung 78 entfallen und kann sich der Streifen 77 stattdessen weiter über die Rückseite des Übergangsbereichs 76 hinweg erstrecken, der Rückseite des Spiralarms 75b weiter folgen, jedoch etwa nach einer Erstreckung, die einer 180°-Krümmung um das Zentrum der Spirale entspricht, enden.

Wie aus der Fig. 4 erkennbar ist, verändert sich die Breite des Spiralarms 77 der Zuleitung in seinem Verlauf vom Zentrum der Spirale zum Rand des Trägers 71, wo er z. B. mit den Zentrumsleitern von Koaxialkabeln 88a, 88b elektrisch verbunden ist. Die Abschirmung des Koaxialkabels ist in diesem Fall mit dem elektrisch leitfähigen Bereich 75 elektrisch verbunden. Durch die sich stufenartig ändernde Breite in dem Verlauf des Spiralarms 77 wird eine Anpassung der Impedanz an den gewünschten Anschlusswert der Antennenstruktur vorgenommen. Ist beispielsweise ein Anschlusswert von 50 Ohm erwünscht, beträgt die Impedanz ohne die Anpassung aber 120 Ohm, führt die stufenweise Änderung der Breite zu der gewünschten Anpassung. Die Anpassung kann auch als Transformation der Impedanz bezeichnet werden. Um eine optimale Anpassung zu erzielen, wird der Abstand zwischen den Stufen 79a, 79b (der Abstand wird nicht linear, sondern entsprechend dem Verlauf des Spiralarms 77 entlang der Krümmung gemessen) so gewählt, dass er gleich einem Viertel der Wellenlänge der Mittenfrequenz des Frequenzbereichs ist, in dem die Antennenstruktur breitbandig funktionieren soll.

Es bezeichne $Z_2$ die Impedanz, die transformiert werden soll (ohne Anpassung) und $Z_1$ die Impedanz, an die angepasst werden soll (gewünschter Anschlusswert). Bei einstufiger Transformation gilt für die Impedanz $Z_T$ des ein Viertel der Wellenlänge langen Transformationswellenleiters $Z_T = \sqrt{Z_1 \cdot Z_2} = \sqrt{50\,\Omega \cdot 120\,\Omega} \approx 77\,\Omega$. Für

die hier verwendete zweistufige und geometrisch abgestufte Transformation mit den beiden ein Viertel der Wellenlänge langen Transformationswellenleitern $Z_{T1}$ und $Z_{T2}$ gilt

$$Z_{T1} = Z_1 \sqrt[3]{\frac{Z_2}{Z_1}} = 50\,\Omega \cdot \sqrt[3]{\frac{120}{50}} \approx 66,9\,\Omega \quad \text{und} \quad Z_{T2} = Z_{T1} \sqrt[3]{\frac{Z_2}{Z_1}} = 66,9\,\Omega \cdot \sqrt[3]{\frac{120}{50}} \approx 89,6\,\Omega$$

. Vgl. dazu Zinke,

O.; Brunswig, H.: Lehrbuch der Hochfrequenztechnik. Berlin, Heidelberg, New York, Tokyo: 1986 (3. Aufl.), Bd. 1, S. 97.

Alternativ zu einer Anpassung der Impedanz durch die beschriebenen, stufenartigen Breitenänderungen kann der Spiralarm der Anschlussleitung in seinem Verlauf vom Zentrum der Spirale nach außen auch kontinuierlich breiter werden. Auch hierdurch kann eine Anpassung der Impedanz vorgenommen werden.

In bevorzugter Ausgestaltung weist die Antennenstruktur eine Frequenzweiche (z. B. 72 in Fig. 4) auf, die bevorzugtermaßen ebenfalls in Streifenleitertechnik auf demselben Träger aufgebracht ist, der die eigentlichen Antennen trägt. Z. B. ist der Spiralarm 77 an seinem aus Sicht des Spiralzentrums äußeren Ende an eine so gestaltete Frequenzweiche angeschlossen. Die Frequenzweiche dient dazu, Frequenzsignale, die in verschiedenen Frequenzbereichen liegen, auf zwei verschiedene oder sogar mehr als zwei verschiedene Anschlussleitungen zu verteilen. Die Anschlussleitungen sind beispielsweise jeweils durch ein Koaxialkabel 88a, 88b gebildet. Z. B. sind zwei Anschlussleitungen vorhanden und teilt die Frequenzweiche Signale im Bereich des Frequenzbandes für Bluetooth von Signalen im Bereich eines GSM-Frequenzbandes. Insofern weicht die hier beschriebene Ausführungsform von der zuvor beschriebenen mit einer einzigen Verbindung 64 zwischen der Antennenstruktur 63 und der Freisprecheinrichtung 54 ab. Daher kann die Anschlussleitung für das GSM-Frequenzband auch direkt, ohne die Freisprecheinrichtung 54 zu erreichen mit der Antennenleitung des Kraftfahrzeugs verbunden werden.

Die Frequenzweiche 72 wird vorzugsweise als Duplexweiche ausgestaltet, d. h. sie teilt nicht nur Frequenzen auf die Anschlussleitungen auf, die von der Antennenstruktur empfangenen Frequenzsignalen entsprechen, sondern ermöglicht auch über die Anschlussleitungen Sendesignale zuzuführen, damit diese von der Antennenstruktur ausgesendet werden. In diesem Fall vereint die Frequenzweiche die Signale, die über die verschiedenen Anschlussleitungen der Antennenstruktur zugeführt werden. Auch kann die Frequenzweiche ausschließlich für den Sendebetrieb verwendet werden.

Alternativ zu der beschriebenen Ausgestaltung der Frequenzweiche in Streifenleitertechnik können auch handelsübliche, separate Bauelemente verwendet werden, die beispielsweise an dem Träger der Antennenstruktur befestigt werden oder die an einer anderen Halterung befestigt werden. Dabei kann die Frequenzweiche z. B. aus einer geeigneten Kombination von Bandpassfiltern aufgebaut sein.

Um Dämpfungsverluste bei der drahtlosen Übertragung der Signale zwischen der Antennenstruktur und der Mobiltelefonantenne zu kompensieren (einschließlich der Möglichkeit, eine zusätzliche Verstärkung vorzunehmen), ist vorzugsweise ein Verstärker vorgesehen, der die Signale auf ihrem Weg von der Antennenstruktur zu anderen Einrichtungen, wie beispielsweise einer Außenantenne des Kraftfahrzeugs oder zu der Freisprecheinrichtung verstärkt. Ein solcher Verstärker, der in die Ankopplungseinheit integriert ist, stellt daher ein optionales, aber bevorzugtes Merkmal der Erfindung dar. Alternativ oder zusätzlich kann ein Verstärker vorgesehen sein (und Teil der Ankopplungseinheit sein), der die Sendesignale auf ihrem Weg zu der Antennenstruktur verstärkt.

Eine spiralförmige Antennenstruktur kann auch anders als anhand von Fig. 7 beschrieben aufgebaut und elektrisch angeschlossen sein. Beispiele hierfür sind in der US 5,621,422 beschrieben. Wie dort näher ausgeführt wird, können die vorhandenen zwei Spiralarme an ihren äußeren Enden elektrisch angeschlossen werden und sind über einen so genannten 180°-Hybrid angeschlossen, der wiederum den Anschluss von Anschlussleitungen für Signale in unterschiedlichen Frequenzbändern ermöglicht (wie in der US 5,621,422 in Fig. 9 und Fig. 10 dargestellt und in der zugehörigen Beschreibung in Spalten 10 und 11 beschrieben).

**Patentansprüche**

1. Anordnung zur Ankopplung eines Mobiltelefons an Einrichtungen eines Kraftfahrzeugs, wobei die Anordnung eine Ankopplungseinheit (K) aufweist, die in dem Kraftfahrzeug verbaubar ist,
**dadurch gekennzeichnet, dass**

- die Ankopplungseinheit (K) eine Freisprecheinrichtung (54) aufweist,
- die Ankopplungseinheit (K) eine Aussparung (35) aufweist, sodass in einem Zustand, in dem die Ankopplungseinheit (K) in dem Kraftfahrzeug verbaut ist, das Mobiltelefon (7) zumindest teilweise in die Aussparung (35) einbringbar ist, und
- die Ankopplungseinheit (K) eine Ankopplungseinrichtung (63) zum drahtlosen Ankoppeln des Mobiltelefons (7) an die Freisprecheinrichtung (54) aufweist, um über die Ankopplungseinrichtung (63) einen Freisprechbetrieb zu ermöglichen.

2. Anordnung nach dem vorhergehenden Anspruch, wobei die Aussparung (35) ein Aufnahmeraum in der Ankopplungseinheit (K) ist und wobei der Aufnahmeraum (35) eine Öffnung (33) aufweist, durch die hindurch das Mobiltelefon (7) ganz oder teilweise in den Aufnahmeraum (35) einbringbar ist.

3. Anordnung nach dem vorhergehenden Anspruch, wobei alle Wände des Aufnahmeraumes (35) von der Ankopplungseinheit (K) gebildet werden.

4. Anordnung nach einem der vorhergehenden Ansprüche, wobei die Aussparung (35) eine Auflagefläche (37) zum Auflegen des Mobiltelefons (7) aufweist und wobei die Auflagefläche (37) durch ein rutschfestes Material gebildet ist.

5. Anordnung nach einem der vorhergehenden Ansprüche, wobei die Aussparung (35) eine Auflagefläche (37) zum Auflegen des Mobiltelefons (7) aufweist und wobei die Auflagefläche (37)durch einen erhöhten Rand (38) berandet ist.

6. Anordnung nach einem der vorhergehenden Ansprüche, wobei die Ankopplungseinheit (K) eine Ankopplungseinrichtung (63) zum drahtlosen Ankoppeln des Mobiltelefons (7) an eine Antenne (52) aufweist, über die bei einem Betrieb des Mobiltelefons (7) in einem Mobiltelefonnetz Funksignale zwischen dem Mobiltelefon (7) und anderen Stationen des Mobiltelefonnetzes übertragen werden.

7. Anordnung nach einem der vorhergehenden Ansprüche, wobei die Ankopplungseinheit (K) derart geformt und ausgestaltet ist, dass sie in einen hinsichtlich seiner Abmessungen genormten Schacht in dem Kraftfahrzeug einbringbar ist.

8. Anordnung nach einem der vorhergehenden Ansprüche, wobei die Ankopplungseinheit (K) ein elektromagnetisch abschirmendes Gehäuse (1) um die Ausnehmung (35) und die Ankopplungseinrichtung (63) bildet.

9. Verfahren zur Ankopplung eines Mobiltelefons an Einrichtungen eines Kraftfahrzeugs, wobei

- eine Ankopplungseinheit (K), die eine Freisprecheinrichtung (54) aufweist, bereitgestellt wird,
- das Mobiltelefon (7) zumindest teilweise in eine Aussparung (35) der Ankopplungseinheit (K) eingebracht wird,
- das Mobiltelefon (7) drahtlos über eine Ankopplungseinrichtung (63) der Ankopplungseinheit (K) an die Freisprecheinrichtung (54) angekoppelt wird, um über die Ankopplungseinrichtung (63) einen Freisprechbetrieb zu ermöglichen.

10. Verfahren nach dem vorhergehenden Anspruch, wobei die Aussparung (35) ein Aufnahmeraum in der Ankopplungseinheit (K) ist und wobei der Aufnahmeraum eine Öffnung (33) aufweist, durch die hindurch das Mobiltelefon (7) ganz oder teilweise in den Aufnahmeraum eingebracht wird.

11. Verfahren nach einem der vorhergehenden Ansprüche, wobei das Mobiltelefon (7) auf eine Auflagefläche (37) der Aussparung (35) aufgelegt wird und wobei die Auflagefläche (37) durch ein rutschfestes Material gebildet ist.

12. Verfahren nach einem der vorhergehenden Ansprüche, wobei die Aussparung (35) eine Auflagefläche (37) zum Auflegen des Mobiltelefons (7) aufweist und wobei die Auflagefläche (37) durch einen erhöhten Rand (38) berandet ist, der ein unbeabsichtigtes Herausrutschen des Mobiltelefons (7) aus der Aussparung (35) verhindert.

13. Verfahren nach einem der vorhergehenden Ansprüche, wobei die Ankopplungseinheit (K) eine Ankopplungseinrichtung (63) zum drahtlosen Ankoppeln des Mobiltelefons (7) an eine Antenne (52) aufweist, über die Funksignale zum Betrieb des Mobiltelefons (7) in einem Mobiltelefonnetz zwischen dem Mobiltelefon (7) und anderen Stationen des Mobiltelefonnetzes übertragen werden.

14. Verfahren nach einem der vorhergehenden Ansprüche, wobei die Ankopplungseinheit (K) in einen hinsichtlich seiner Abmessungen genormten Schacht in dem Kraftfahrzeug eingebracht wird.

15. Verfahren nach einem der vorhergehenden Ansprüche, wobei die Ausnehmung (35) und die Ankopplungseinrichtung (63) durch ein elektromagnetisch abschirmendes Gehäuse (1) der Ankopplungseinheit (K) abgeschirmt werden.

Fig. 1

Fig. 2

Fig. 3

75a

79b

79a

77

73

79c

76

74

75b

77

72

88b    88a

71    Fig. 4

75

Fig. 5

EP 2 028 055 A2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10313625 A1

- US 5621422 A

**In der Beschreibung aufgeführte Nicht-Patentliteratur**

- **ZINKE, O. ; BRUNSWIG, H.** Lehrbuch der Hochfrequenztechnik. Heidelberg, 1986, vol. 1, 97